(19)

**Europäisches Patentamt**
**European Patent Office**
**Office européen des brevets**

(11) **EP 0 952 176 B1**

(12) **EUROPÄISCHE PATENTSCHRIFT**

(45) Veröffentlichungstag und Bekanntmachung des Hinweises auf die Patenterteilung:
**12.12.2007 Patentblatt 2007/50**

(51) Int Cl.:
*C08J 5/18* (2006.01)　　*B32B 15/08* (2006.01)

(21) Anmeldenummer: **99107255.4**

(22) Anmeldetag: **14.04.1999**

(54) **Mehrschichtige, biaxial orientierte Polyesterfolie, Verfahren zu ihrer Herstellung und ihre Verwendung**

Multilayer, biaxially oriented polyester film, process for its manufacture and its use

Film de polyester stratifié orienté biaxialement, son procédé de fabrication et son utilisation

(84) Benannte Vertragsstaaten:
**DE FR GB IT LU**

(30) Priorität: **22.04.1998 DE 19817841**

(43) Veröffentlichungstag der Anmeldung:
**27.10.1999 Patentblatt 1999/43**

(73) Patentinhaber: **Mitsubishi Polyester Film GmbH**
**65203 Wiesbaden (DE)**

(72) Erfinder:
 • **Peiffer, Herbert Dr.**
  **55126 Mainz (DE)**
 • **Davis, Richard Lee**
  **65203 Wiesbaden (DE)**

• **Mahl, Hans**
 **65369 Walluf (DE)**

(74) Vertreter: **Schweitzer, Klaus et al**
**Zounek Plate Schweitzer**
**Patentanwaltskanzlei**
**Rheingaustrasse 196**
**65203 Wiesbaden (DE)**

(56) Entgegenhaltungen:
 **EP-A- 0 378 154　　　EP-A- 0 378 955**
 **EP-A- 0 580 404　　　EP-A- 0 685 509**

 • **DATABASE WPI Section Ch, Week 9522 Derwent Publications Ltd., London, GB; Class A32, AN 95-166886 XP002114408 & JP 07 088952 A (TORAY IND INC), 4. April 1995 (1995-04-04)**

# EP 0 952 176 B1

**Beschreibung**

Die Erfindung betrifft eine transparente, biaxial orientierte Polyesterfolie mit einer Basisschicht, die zu mindestens 80 Gew.-% aus einem thermoplastischen Polyester besteht, und mindestens einer Deckschicht. Die Folie zeichnet sich durch ein gutes Verarbeitungsverhalten und durch gute optische Eigenschaften aus und besitzt nach ihrer Metallisierung oder nach ihrer Beschichtung mit oxidischen Materialien eine sehr gute Gas- bzw. Sauerstoffbarriere. Die Erfindung betrifft weiterhin ein Verfahren zur Herstellung der Folie und ihre Verwendung.

Biaxial orientierte Polyesterfolien werden im Verpackungs- oder im industriellen Sektor hauptsächlich dort verwendet, wo ihre vorteilhaften Eigenschaften, d.h. eine gute Optik, hohe mechanische Festigkeiten, eine gute Sperrwirkung, insbesondere gegenüber Gasen, eine gute Dimensionsstabilität in der Wärme und eine ausgezeichnete Planlage benötigt werden.

Bei Lebensmittelverpackungen wird aus verpackungstechnischen Gründen eine hohe Sperrwirkung gegenüber Gasen, Wasserdampf und Aromastoffen verlangt (gleichbedeutend mit einer geringen Durchlässigkeit oder geringen Permeation). Ein gängiges Verfahren, solche Verpackungen herzustellen, besteht darin, die dafür verwendeten Kunststofffolien mit Aluminium im Hochvakuum zu bedampfen bzw. zu metallisieren. Weitere gängige Verfahren bestehen darin, die Folien mit oxidischen Materialien (z.B. $SiO_x$, oder $Al_xO_y$) oder mit Wasserglas zu beschichten. Hierbei handelt es sich im wesentlichen um transparente Beschichtungen.

Die Sperrwirkung gegenüber den oben genannten Stoffen hängt im wesentlichen von der Art der Polymeren in der Folie und der Güte der aufgebrachten Sperrschichten ab. So wird mit metallisierten, biaxial orientierten Polyesterfolien eine sehr hohe Sperrwirkung gegenüber Gasen, wie Sauerstoff und Aromastoffen, erzielt. Gegenüber Wasserdampf erreicht man sie mit metallisierten, biaxial orientierten Polypropylenfolien.

Aufgrund ihrer guten Sperreigenschaften werden mit metallisierten oder oxydisch beschichteten Folien insbesondere Lebens- und Genußmittel verpackt, bei denen durch lange Lager- oder Transportzeiten die Gefahr besteht, daß im Falle einer nicht ausreichenden Barriere die verpackten Lebensmittel verderben, ranzig werden oder an Geschmack verlieren, beispielsweise bei Kaffee, fetthaltigen Snacks (Nüssen, Chips u.a.) oder kohlensäurehaltigen Getränken (in Standbeuteln; engl.: pouches).

Sollen Polyesterfolien mit einer aufgedampften Aluminiumschicht oder mit aufgebrachten oxidischen Schichten als Verpackungsmaterial verwendet werden, dann sind sie in der Regel Bestandteil eines mehrschichtigen Folienverbunds (Laminat). Daraus hergestellte Beutel lassen sich z. B. auf einer vertikalen Schlauchbeutel-, Form-, Füll und Verschließmaschine (vffs) füllen. Die Beutel werden auf ihrer Innenseite (d.h. auf der dem Füllgut zugewandten Seite) gesiegelt, wobei die Siegelschicht z.B. aus Polyethylen besteht. Der Folienverbund weist dabei den folgenden typischen Aufbau auf: Polyesterschicht/Aluminium- oder Oxydschicht/Kleberschicht/Siegelschicht. Die Metall-oder Oxydschicht ist nur 10 bis 80 nm dick. Diese sehr dünne Funktionsschicht genügt bereits, um einen ausreichenden Lichtschutz und sehr gute Barriereeigenschaften zu erreichen.

Die Gas- bzw. Sauerstoffbarriere bzw. die Sauerstoffdurchlässigkeit wird in der Regel nicht an dem Laminat oder der Verpackung selbst, sondern an der metallisierten Polyesterfolie gemessen. Um die Qualität der Lebens- oder Genußmittel auch bei längeren Lagerzeiten zu gewährleisten, darf die Sauerstoffdurchlässigkeit (gleich Permeation) der metallisierten Folie nicht mehr als 2 $cm^3/(m^2 \cdot bar \cdot d)$, insbesondere aber nicht mehr als 1,5 $cm^3/(m^2 \cdot bar \cdot d)$ betragen. Zukünftig geht die Forderung der Verpackungsindustrie in Richtung einer noch weiter erhöhten Barriere, wobei Permeationswerte der metallisierten Folien von weniger als 1,0 $cm^3/(m^2 \cdot bar \cdot d)$ angestrebt werden.

Nach dem Stand der Technik ist es weder hinreichend bekannt, worauf die Barrierewirkung von metallisierten oder oxydisch beschichteten, biaxial oientierten Polyesterfolien im einzelnen beruht, noch wie diese entscheidend zu verbessern ist. Wichtige Einflußgrößen sind offensichtlich die Substratoberfläche, das Substratpolymer sowie dessen Morphologie.

In "Thin Solids Films" 204 (1991), S. 203-216, wurde von Weiss u.a. der Einfluß der Rauhigkeit einer Substratschicht auf die Permeation untersucht. Dazu wurden Polyesterfolien mit Lack beschichtet, der in unterschiedlichen Konzentrationen Titandioxidpartikel enthielt. In den beschriebenen Experimenten wurde die Konzentration an Titandioxidpartikel im Lack zwischen 2 und 20 Gew.-% variiert. Die Rauhigkeit $R_a$ der gecoateten Substratoberfläche konnte mit dieser Methode von 43 nm (unlackierte und lackierte Folie, ohne Titandioxid) bis 124 nm varriert werden. In seinen Experimenten ergaben sich mit steigender Rauhigkeit (steigendem $TiO_2$ -Anteil) der lackierten Oberfläche eindeutig höhere Sauerstoffdurchlässigkeiten nach dem Aluminiumbedampfen. Der allerdings größte Sprung in der Sauerstoffdurchlässigkeit wurde für die lackierte Folie (0 Gew.-%) gegenüber der unlackierten Folie festgestellt. In beiden Fällen war die Rauhigkeit der Substratoberfläche jedoch gleich groß. Allein durch das Lackieren der Folie verschlechterte sich die Barriere von ca. 0,43 $cm^3/(m^2 \cdot d \cdot bar)$ (plain film) auf ca. 19 $cm^3/(m^2 \cdot d \cdot bar)$ (lackierte Folie). Eine weitere Unsicherheit hinsichtlich der Übertragbarkeit dieser Lehre auf kommerzielle Produkte entsteht dadurch, daß die Aluminiumschicht mittels Laborverdampfer aufgebracht wurde. Hierbei werden im Vergleich zum Industriemetallisierer wesentlich niedrige Permeationswerte erreicht, und der Einfluß der Substratoberfläche auf die Barriereeigenschaften wird verschmiert.

Weitere detaillierte Untersuchungsergebnisse über den Einfluß der Substratoberfläche von Polyesterfolien auf die Barriereeigenschaften sind in der Dissertation von H. Utz (Technische Universität München 1995: "Barriereeigenschaften aluminiumbedampfter Kunststoffolien") zu finden.

Die EP-A-0 490 665 A1 beschreibt eine einschichtige, biaxial orientierte Polyesterfolie für magnetische Aufzeichnungsbänder, die

a) 0,05 bis 1,0 Gew.-% ω-Aluminiumoxid mit einem durchschnittlichen Teilchendurchmesser im Bereich von 0,02 bis 0,3 μm, und

b) 0,01 bis 1,5 Gew.-% inerte Partikel anderen Typs als ω-Aluminiumoxid mit einem durchschnittlichen Teilchendurchmesser im Bereich von 0,1 bis 1,5 μm enthält, wobei diese Partikel größer sind als die ω-Alumimiumoxidteilchen.

Die Oberfläche dieser Folie wird durch eine Vielzahl von Erhebungen/Vorsprünge gebildet, die durch die Beziehung

$$-11,4\,x + 4 < \log y < -10,0\,x + 5 \qquad\qquad y > 30,\ x > 0,05\ \mu m$$

beschrieben werden. In dieser Gleichung bedeutet x (μm) ein Abstand in Höhenrichtung von einem Standard Level und y die Anzahl an Erhebungen (Anzahl/mm$^2$), wenn die Erhebungen bei einer Höhe von x geschnitten werden. Die Verteilung der Erhebungen wird mit einem Standard Rauhigkeitsmeßgerät bestimmt. Bezüglich Verbesserung der Barriereeigenschaften, des Glanzes oder der Trübung vermittelt diese Schrift keine Lehre.

Nach dem Stand der Technik sind weiterhin Folien bekannt, die sich dadurch auszeichnen, daß ihre beiden Oberflächen unterschiedlich rauh sind (dual surface). Diese Folien sind insbesondere für magnetische Aufzeichnungsmedien geeignet und zeichnen sich im wesentlichen durch unterschiedliche Topographien aus (z.B. Oberfläche A glatt, Oberfläche B rauh). Im allgemeinen werden mit der Lehre dieser Schriften die Verarbeitungseigenschaften der Folie verbessert, nicht aber die Barriereeigenschaften der Folie.

Die EP-B-0 088 635 beschreibt eine koextrudierte biaxial orientierte Polyesterfolie mit wenigstens zwei Schichten, von denen eine Schicht A aus thermoplastischem Harz besteht, und einer Schicht B, die thermoplastisches Harz und feine Teilchen enthält. Die Folie ist dadurch gekennzeichnet, daß die Oberflächenrauhigkeit R$_a$ der äußeren Oberfläche der Schicht A kleiner als 5 nm ist und die äußere Oberfläche der Schicht B entweder

- eine Oberfläche mit einer Oberflächenrauhigkeit R$_a$ von 5 bis 40 nm ist und eine Vielzahl von Vertiefungen und eine Vielzahl von Vorsprüngen aufweist, die in einer bestimmten Anordnung angeordnet sind oder
- eine Oberfläche ist, die auf einer ebenen Fläche gebildete Vorsprünge aufweist und deren Oberfläche mit einer Schicht C bedeckt ist, die aus einem Schmiermittel besteht und eine Oberflächenrauhigkeit R$_a$ von 5 bis 40 nm aufweist.

Nachteilig an der Folieoberfläche A ist, daß sie gegen sich selbst und gegenüber bestimmten anderen Oberflächen (z.B. Gummiwalzen) blockt. Die Folie läßt sich nicht wirtschaftlich verarbeiten, insbesondere beim Metallisieren im Vakuum neigt die Folie infolge der hohen Blockneigung zu Abrissen, was mit großem wirtschaftlichen Schaden verbunden sein kann. Die Folie ist im Sinne der zu lösenden Aufgabe nicht geeignet.

Weiterhin ist bekannt, daß sich durch eine besondere Auswahl der Polymere für die als Substrat dienende Folie die Gas- bzw. Sauerstoffbarriere verbessern läßt (Schricker, G.: Metallisierte Kunststoffolien für höherwertige Verpackungen. In: ICI 5th International Metallising Symposium 1986, Cannes). Besonders geeignet sind beispielsweise Polyester, speziell solche aus Ethylenglykol und Terephthalsäure oder aus Ethylenglykol, Terephthalsäure und Naphthalin-2,6-dicarbonsäure. Daneben sind auch Polyamide, Ethylen-Vinylalkohol-Copolymere (EVOH) und Polyvinylidenchlorid vorteilhaft verwendbar. So beschreibt beispielsweise die US-A 5 506 014 einen Copolyester aus (a) 45 bis 85 mol-% Terephthalsäure, (b) 10 bis 40 mol-% Naphthalindicarbonsäure, c) 5 bis 15 mol-% einer Dicarbonsäure mit 2 bis 8 Kohlenstoffatomen und (d) Ethylenglykol (die Molprozente beziehen sich auf den Gesamtanteil an Dicarbonsäuren). Dieser Polyester soll sich durch verbesserte Barriereeigenschaften gegenüber Gasen auszeichnen. Verwendet wird er u.a. für die Herstellung von Flaschen oder Behältern sowie von Folien unterschiedlicher Stärke. Nachteilig an den genannten Rohstoffen ist, daß sie gegenüber Polyethylenterephthalat (PET) deutlich teurer oder für die Anwendung in der Lebensmittelverpackung ungeeignet bzw. nicht amtlich zugelassen sind.

Die EP-A-0 378 955 beschreibt einschichtige, biaxial orientierte Polyesterfolien mit einer planaren Orientierung von ≥ 0.165 zur Laminierung mit Polyolefinen. Solche Laminate eignen sich besonders für Verpackungen.

Die EP-A-0 580 404 beschreibt mehrschichtige, biaxial orientierte Polyesterfolien zur Blechlaminierung.

Die EP-A-0 685 509 beschreibt einschichtige, biaxial orientierte Polyesterfolien mit einer planaren Orientierung von 0.12 bis 0.19 zur Laminierung mit Metallblechen.

WPI/Derwent Abstract 95-166886 (JP930265665) erwähnt Folien mit einer planaren Orientierung von ≥ 0.150.

Aufgabe der vorliegenden Erfindung war es nun, eine koextrudierte, biaxial orientierte Polyesterfolie zur Verfügung zu stellen, die nach Metallisierung oder nach Beschichtung mit oxidischen Materialien eine sehr gute Gas- bzw. Sauerstoffbarriere aufweist. Weiterhin soll sich die Folie durch gute optische Eigenschaften (geringe Trübung, hoher Glanz) und durch eine gute Herstellbarkeit und Verarbeitbarkeit (geringer Reibungskoeffizient) auszeichnen.

Die Gas- bzw. Sauerstoffpermeation durch die Folie soll nach der Metallisierung weniger als 1,0 $cm^3/(m^2 \, d \, bar)$ betragen. Die Gas- bzw. Sauerstoffpermeation durch die Folie nach der Beschichtung mit oxidischen Materialien soll weniger als 3,0 $cm^3/(m^2 \, d \, bar))$ betragen. Der Glanz der Folie soll größer als 170 und die Trübung niedriger als 2,0 % sein. Die Folie soll den bekannten Verpackungsfolien dieser Art in den übrigen Eigenschaften mindestens gleichwertig sein. Sie soll sich zudem einfach und preiswert herstellen lassen, sowie auf den herkömmlichen Maschinen gut verarbeiten lassen. Der Reibungskoeffizient auf mindestens einer der beiden Oberflächen soll kleiner als 0,5 sein.

Gelöst wird die Aufgabe durch eine koextrudierte, zumindestens zweischichtige, biaxial orientierte Polyesterfolie mit einer Basisschicht, die zu mindestens 80 Gew.-% aus einem thermoplastischemn Polyester besteht, und mindestens einer Deckschicht, die interne und/oder inerte Partikel enthält, wobei die Folie dadurch gekennzeichnet ist, daß ihre planare Orientierung $\Delta p$ größer als 0,165 ist.

Unter internen Partikeln werden Katalysatorrückstände verstanden, die bei der Polyesterherstellung im Rohstoff verbleiben.

Unter inerten Partikeln werden Partikel verstanden, die dem Rohstoff additiv, z.B. bei dessen Herstellung hinzugegeben werden.

Zur Erzielung der gewünschten Sauerstoffpermeation metallisierter oder oxydisch beschichteter Folien muß entsprechend der Lösung der Aufgabe die planare Orientierung $\Delta p$ der erfindungsgemäßen Folie größer als ein vorgegebener Zahlenwert sein. Dieser Zahlenwert ist durch $\Delta p = 0,164$ festgelegt.

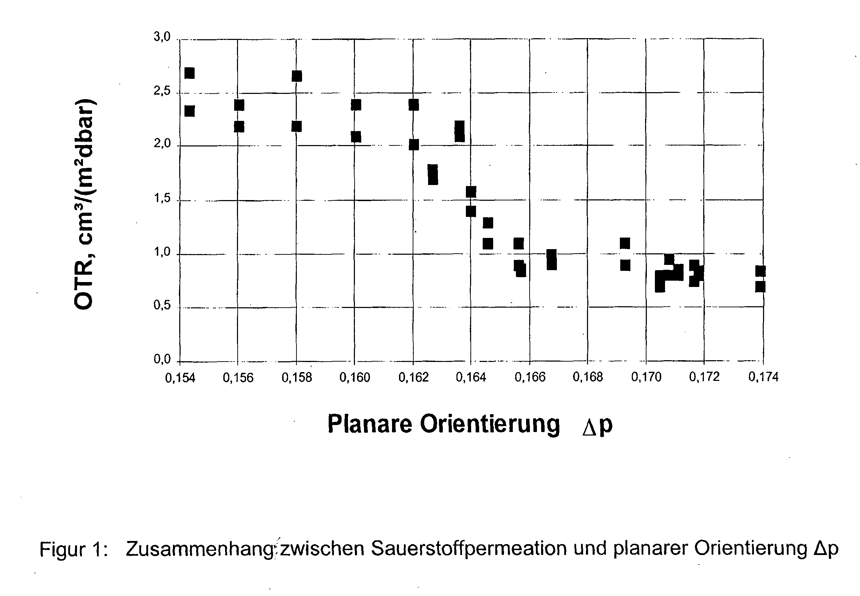

Für die Erzielung von guten Gas- bzw. Sauerstoffbarrieren metallisierter oder oxydisch beschichteter PET-Folien ist demzufolge eine hohe planare Orientierung $\Delta p$ erforderlich. Ist die planare Orientierung $\Delta p$ der Folie kleiner als der oben angegebene Wert (**vgl. Figur 1**), so ist die Barriere im vorliegendem Sinne schlecht, ist die planare Orientierung $\Delta p$ der Folie größer als der oben angegebene Wert, so ist die Barriere im vorliegenden Sinne gut.

In einer bevorzugten Ausführungsform der erfindungsgemäßen Folie beträgt die planare Orientierung $\Delta p$ der erfindungsgemäßen Folie mehr als 0,165 und in einer ganz besonder bevorzugten Ausführungsform mehr als 0,166.

In den bevorzugten und den besonders bevorzugten Ausführungsformen hat die erfindungsgemäße Folie in der metallisierten oder oxydisch beschichteten Form eine besonders gute Gas- bzw. Sauerstoffbarriere.

Weiterhin hat es sich für die Erzielung einer hohen Barriere als günstig erwiesen, wenn der Brechungsindex $n_z$ in Dickenrichtung der Folie kleiner als ein vorgegebener Wert ist. Dieser Wert ist $n_z = 1,495$.

Die Unteransprüche geben bevorzugte Ausführungsformen der Erfindung an, welche nachstehend zusätzlich erläutert werden.

Erfindungsgemäß ist die Folie zumindest zweischichtig aufgebaut und weist auf der einen Seite der Schicht B (=Basisschicht) die Deckschicht A auf. Beide Schichten können die für die Herstellung und Verarbeitung der Folie förderlichen Pigmente erhalten.

Die erfindungsgemäße Polyesterfolie ist in einer besonders bevorzugten Ausführungsform dreischichtig aufgebaut und enthält dann die beiden Deckschichten A und C. Dicke und Zusammensetzung der zweiten Deckschicht C können unabhängig von der Deckschicht A gewählt werden. Die Deckschicht C kann die Polymere oder Polymermischungen enthalten, wie die Deckschicht A. Sie kann aber auch andere gängige Deckschichtpolymere enthalten.

Für die Materialien der verschiedenen Schichten können prinzipiell verschiedene Rohstoffe verwendet werden. Es ist jedoch bevorzugt, die einzelnen Schichten auf Basis von Polyesterrohstoffen herzustellen.

Die Basisschicht der Folie besteht bevorzugt zu mindestens 90 Gew.-% aus einem thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethyl-cyclohexan und Terephthalsäure [= Poly(1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat PENBB). Besonders bevorzugt sind Polyester, die zu mindestens 90 mol-%, bevorzugt mindestens 95 mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen aliphatischen, cycloaliphatischen oder aromatischen Diolen bzw. Dicarbonsäuren, wie sie auch in der Schicht A (oder der Schicht C) vorkommen können.

Geeignete andere aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen. Von den cycloaliphatischen Diolen sind Cyclohexandiole (insbesondere Cyclohexan-1,4-diol) zu nennen. Geeignete andere aromatische Diole entsprechen beispielsweise der Formel $HO-C_6H_4-X-C_6H_4-OH$, wobei X für $-CH_2-$, $-C$

$(CH_3)_2$-, -$C(CF_3)_2$-, -O-, -S- oder -$SO_2$- steht. Daneben sind auch Bisphenole der Formel HO-$C_6H_4$-$C_6H_4$-OH gut geeignet.

Andere aromatische Dicarbonsäuren sind bevorzugt Benzoldicarbonsäuren, Naphthalindicarbonsäuren (beispielsweise Naphthalin-1,4- oder 1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x, x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die ($C_3$-$C_{19}$) Alkandisäuren besonders geeignet, wobei der Alkanteil geradkettig oder verzweigt sein kann.

Die Herstellung der Polyester kann nach dem Umesterungsverfahren erfolgen. Dabei geht man von Dicarbonsäureestern und Diolen aus, die mit den üblichen Umesterungskatalysatoren, wie Zink-, Calcium-, Lithium-, Magnesium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Für die Deckschichten können prinzipiell die gleichen Polymere verwendet werden, wie für die Basisschicht. Daneben können in den Deckschichten auch andere Materialien enthalten sein, wobei dann die Deckschichten bevorzugt aus einem Gemisch von Polymeren, einem Copolymeren oder einem Homopolymeren besteht, welches Ethylen-2,6-naphthalat-Einheiten und Ethylen-terephthalat-Einheiten enthalten. Bis zu 10 Mol-% der Polymere können aus weiteren Comonomeren (s.o.) bestehen.

Für die Verarbeitung der Polymere hat es sich als günstig erwiesen, die Polymere für die Basisschicht und die anderen Schichten so zu wählen, daß sich die Viskositäten der jeweiligen Polymerschmelzen nicht zu sehr unterscheiden. Im anderen Fall ist mit Fließstörungen oder mit Streifenbildung auf der fertigen Folie zu rechnen. Für die Beschreibung der Viskositätsbereiche der beiden Schmelzen wird eine modifizierte Lösungsmittelviskosität (SV-Wert oder "solution viscosity") verwendet. Für handelsübliche Polyethylenterephthalate, die sich zur Herstellung von biaxial orientierten Folien eignen, liegen die SV-Werte im Bereich von 600 bis 1000. Um eine einwandfreie Qualität der Folie im Sinne der vorliegenden Erfindung zu gewährleisten, sollte der SV-Wert der Polymeren für die Schichten A oder C im Bereich von 300 bis 1200, bevorzugt im Bereich von 400 bis 1150, insbesondere bevorzugt im Bereich von 500 bis 1000 liegen. Falls erwünscht, kann an den jeweiligen Granulaten eine Festphasenkondensation durchgeführt werden, um die benötigten SV-Werte der Materialien einzustellen. Allgemein gilt, daß sich die Schmelzviskositäten der Polymerschmelzen für Basis- und die anderen Schichten um nicht mehr als den Faktor 5, vorzugsweise nicht mehr als den Faktor 2 bis 3, unterscheiden sollten.

Die Basisschicht und die anderen Schichten können zusätzlich übliche Additive, wie Stabilisatoren und Antiblockmittel, enthalten. Sie werden zweckmäßig dem Polymer bzw. der Polymermischung bereits vor dem Aufschmelzen zugesetzt. Als Stabilisatoren werden beispielsweise Phosphorverbindungen, wie Phosphorsäure oder Phosphorsäureester, eingesetzt.

Typische Antiblockmittel (in diesem Zusammenhang auch als Pigmente bezeichnet) sind anorganische und/ oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, LiF, Calcium-, Barium-, Zink- oder Mangan-Salze der eingesetzten Dicarbonsäuren, Ruß, Titandioxid, Kaolin oder vernetzte Polystyrol- oder Arcrylat-Partikel.

Als Additive können auch Mischungen von zwei und mehr verschiedenen Antiblockmitteln oder Mischungen von Antiblockmitteln gleicher Zusammensetzung, aber unterschiedlicher Partikelgröße gewählt werden. Die Partikel können den einzelnen Schichten in den jeweils vorteilhaften Konzentrationen, z.B. als glykolische Dispersion während der Polykondensation oder über Masterbatche bei der Extrusion zugegeben werden. Als besonders geeignet haben sich Pigmentkonzentrationen von 0 bis 5 Gew.-% erwiesen. Eine detaillierte Beschreibung der Antiblockmittel findet sich beispielsweise in der EP-A-0 602 964.

Bevorzugte Partikel sind $SiO_2$ in kolloidaler und in kettenartiger Form. Diese Partikel werden sehr gut in die Polymermatrix eingebunden und erzeugen nur geringfügig Vakuolen. Vakuolen verursachen im allgemeinen Trübung und sind daher zweckmäßigerweise zu vermeiden. Die Partikeldurchmesser der eingesetzten Teilchen sind prinzipiell nicht eingeschränkt. Für die Lösung der Aufgabe hat es sich jedoch als zweckmäßig erwiesen, Teilchen mit einem mittleren Primärpartikeldurchmesser von kleiner als 100 nm, bevorzugt kleiner als 60 nm und besonders bevorzugt kleiner als 50 nm und/oder Teilchen mit einem mittleren Primärpartikeldurchmesser von größer als 1 $\mu$m, bevorzugt größer als 1,5 $\mu$m und besonders bevorzugt größer als 2 $\mu$m zu verwenden.

Die Pigmentierung der einzelnen, die Deckschichten nicht betreffende Schichten, kann danach sehr verschieden sein und richtet sich im wesentlichen nach dem Folienaufbau (Schichtaufbau) und den Anforderungen der Folie hinsichtlich Erzielung der weiteren optischen Eigenschaften (Trübung) und dem Herstellungs- und Verarbeitungsverhalten.

Handelt es sich um die bevorzugte dreischichtige Folie mit der Basisschicht B und den beiden Deckschichten A und C, so ist in der Basisschicht B die Partikelkonzentration vorzugsweise niedriger als in den Deckschichten. Bei einer dreischichtigen Folie vom genannten Typ wird in der Basisschicht B die Partikelkonzentration zwischen 0 und 0,15 Gew.-%, vorzugsweise zwischen 0 und 0,12 Gew.-% und insbesondere zwischen 0 und 0,10 Gew.-% liegen. Der Partikeldurchmesser der eingesetzten Teilchen ist prinzipiell nicht eingeschränkt, jedoch sind Teilchen mit einem mittleren Durchmesser von größer 1 μm besonders bevorzugt.

Zur Erzielung der oben genannten Folieneigenschaften, insbesondere den Permeationswerten nach Metallisierung/Beschichtung mit oxydischen Materialien der Folie, hat es sich darüber hinaus als günstig erwiesen, wenn die Folienoberflächen spezielle Topographien aufweisen. Für die hier beschriebenen Folien sollte für mindestens eine Folienoberfläche die Anzahl N der Erhebungen (pro mm²), die Höhe h (in μm) und der Durchmesser d (in μm) der Erhebungen über folgende Gleichungen verknüpft sein:

$$-1 - 3{,}7 * \log h/\mu m < \log N/mm^2 < 2{,}48 - 2{,}22 * \log h/\mu m \qquad (1)$$

$$\text{mit } 0{,}05\ \mu m < h < 1{,}00\ \mu m$$

$$1{,}7 - 3{,}86 * \log d/\mu m < \log N/mm^2 < 4{,}7 - 2{,}7 * \log d/\mu m \qquad (2)$$

$$\text{mit } 0{,}2\ \mu m < d < 10\ \mu m$$

N in Anzahl/mm²
h in μm
d in μm.

Für die hier beschriebenen Folien hat es sich darüber hinaus als zweckmäßig erwiesen, wenn die Folienoberfläche, die im nachhinein metallisiert oder mit oxydischen Materialien beschichtet wird, folgender Bedingungen gehorcht:

$$\log N/mm^2 < 1{,}4 - 2{,}5 * \log h/\mu m \qquad (3)$$

$$\text{mit } 0{,}05\ \mu m < h < 1{,}00\ \mu m$$

$$\log N/mm^2 < 3{,}4 - 2{,}4 * \log d/\mu m \qquad (4)$$

$$\text{mit } 0{,}2\ \mu m < d < 10\ \mu m$$

N in Anzahl/mm²
h in μm
d in μm.

In einer ganz besonders bevorzugten Ausführungsform liegt der $R_a$-Wert zumindest einer Folienseite zwischen 30 und 90 nm und insbesondere zwischen 35 und 80 nm.
Die zuvor beschriebenen Oberflächentopographien und die Rauhigkeiten werden durch die Hinzugabe (bzw. Vorhandensein) der zuvor beschriebenen Partikeln in der/den Deckschicht(en) und eventuell auch in der Basis erreicht.
Zwischen der Basisschicht und den Deckschichten kann sich gegebenenfalls noch eine Zwischenschicht befinden. Diese kann wiederum aus den für die Basisschichten beschriebenen Polymeren bestehen. In einer besonders bevorzugten Ausführungsform besteht sie aus dem für die Basisschicht verwendeten Polyester. Sie kann auch die beschriebenen üblichen Additive enthalten. Die Dicke der Zwischenschicht ist im allgemeinen größer als 0,3 μm und liegt bevorzugt im Bereich von 0,5 bis 15 μm, besonders bevorzugt im Bereich von 1,0 bis 10 μm und ganz besonders bevorzugt im Bereich von 1,0 bis 5 μm.
Bei der besonders vorteilhaften dreischichtigen Ausführungsform der erfindungsgemäßen Folie sind die Dicken der Deckschichten A und C im allgemeinen größer als 0,1 μm und liegen im Bereich von 0,2 bis 4,0 μm, bevorzugt im

Bereich von 0,2 bis 3,0 $\mu$m, besonders bevorzugt im Bereich von 0,3 bis 2,5 $\mu$m und ganz besonders bevorzugt im Bereich von 0,3 bis 2,0 $\mu$m, wobei die Deckschichten A und C gleich oder verschieden dick sein können.

Die Gesamtdicke der erfindungsgemäßen Polyesterfolie kann innerhalb weiter Grenzen variieren und richtet sich nach dem beabsichtigten Verwendungszweck. Sie beträgt 4 bis 50 $\mu$m, insbesondere 5 bis 45 $\mu$m, vorzugsweise 6 bis 40 $\mu$m, wobei die Schicht B einen Anteil von vorzugsweise etwa 10 bis 90 % an der Gesamtdicke hat.

Zur Herstellung der Schichten A und C (Deckschicht/en A und C) werden zweckmäßig Granulate aus Polyethylenterephthalat einem bzw. zwei Extrudern zugeführt. Die Materialien werden bei etwa 300 °C aufgeschmolzen und extrudiert.

Die Polymere für die Basisschicht werden zweckmäßig über einen weiteren Extruder zugeführt. Etwa vorhandene Fremdkörper oder Verunreinigungen lassen sich aus der Polymerschmelze vor der Extrusion abfiltrieren. Die Schmelzen werden dann in einer Mehrschichtdüse zu flachen Schmelzefilmen ausgeformt und übereinander geschichtet. Anschließend wird der Mehrschichtfilm mit Hilfe einer Kühlwalze und gegebenenfalls weiterer Walzen abgezogen und verfestigt.

Die biaxiale Verstreckung wird im allgemeinen sequentiell durchgeführt. Dabei wird vorzugsweise erst in Längsrichtung (d.h. in Maschinenrichtung, =MD-Richtung) und anschließend in Querrichtung (d.h. senkrecht zur Maschinenrichtung, =TD-Richtung) verstreckt. Dies führt zu einer Orientierung der Molekülketten. Das Verstrecken in Längsrichtung läßt sich mit Hilfe zweier entsprechend dem angestrebten Streckverhältnis verschieden schnell laufenden Walzen durchführen. Zum Querverstrecken benutzt man allgemein einen entsprechenden Kluppenrahmen.

Die Temperatur, bei der die Verstreckung durchgeführt wird, kann in einem relativ großen Bereich variieren und richtet sich nach den gewünschten Eigenschaften der Folie. Im allgemeinen wird die Längsstreckung bei 80 bis 130 °C und die Querstrekkung bei 90 bis 150 °C durchgeführt. Das Längsstreckverhältnis liegt allgemein im Bereich von 2,5:1 bis 6:1, bevorzugt von 3:1 bis 5,5:1. Das Querstreckverhältnis liegt allgemein im Bereich von 3,0:1 bis 5,0:1, bevorzugt von 3,5:1 bis 4,5:1. Die planare Orientierung $\Delta$p von >0,164 kann beispielsweise über eine Variation der Längsstreckung- und/oder Querstreckungsparameter und/oder den SV-Wert des verwendeten Rohstoffes eingestellt werden. Insbesondere die Streckverhältnisse in Längs- und Querrichtung ($\lambda_{MD}$ und $\lambda_{TD}$), die Strecktemperaturen in Längs- und in Querrichtung ($T_{MD}$ und $T_{TD}$), die Folienbahngeschwindigkeit und die Art der Streckung, insbesondere diejenige in Längsrichtung der Maschine beeinflussen die planare Orientierung. Erhält man beispielsweise mit einer Maschine eine planare Orientierung von $\Delta$p = 0,162 mit dem Parametersatz $\lambda_{MD}$ = 4,3 und $\lambda_{TD}$ = 4,0, $T_{MD}$ = 80-125 °C und $T_{TD}$ = 80-135 °C, so erhält man durch Absenkung der Längsstrecktemperatur auf $T_{MD}$ = 80-118 °C oder durch Absenkung der Querstrecktemperatur auf $T_{TD}$ = 80-125 °C oder durch Anhebung des Längsstreckverhältnisses auf $\lambda_{MD}$ = 4,9 oder durch Anhebung des Querstreckverhältnisses auf $\lambda_{TD}$ = 4,5 eine planare Orientierung $\Delta$p, die im erfindungsgemäßen Bereich liegt. Die Folienbahngeschwindigkeit betrug hierbei 340 m/min und der SV-Wert des Materials etwa 730. Vor der Querstreckung kann man eine oder beide Oberfläche(n) der Folie nach den bekannten Verfahren in-line beschichten. Die In-Line-Beschichtung kann beispielsweise zu einer verbesserten Haftung der Metallschicht oder einer eventuell aufgebrachten Druckfarbe, aber auch zur Verbesserung des antistatischen Verhaltens oder des Verarbeitungsverhaltens dienen.

Bei der nachfolgenden Thermofixierung wird die Folie etwa 0,1 bis 10 s lang bei einer Temperatur von 150 bis 250 °C gehalten. Anschließend wird die Folie in üblicher Weise aufgewickelt.

Die biaxial verstreckte und thermofixierte Polyesterfolie kann vor dem Aufbringen der metallischen oder oxydischen Schicht auf einer oder beiden Seite(n) corona- oder flammbehandelt werden. Die Behandlungsintensität ist so gewählt, daß die Oberflächenspannung der Folie im allgemeinen über 45 mN/m liegt.

Das Aufbringen von Metall- oder oxydischen Schichten erfolgt auf üblichen industriellen Anlagen. Metallschichten aus Aluminium werden üblicherweise durch Bedampfen in herkömmlichen Metallisierern (Schiffchenmethode) hergestellt. Bei oxydischen Schichten haben sich daneben insbesondere Elektronenstrahlverfahren oder Aufsputtern bewährt. Die Verfahrensparameter der Anlage beim Aufbringen der Metallschicht bzw. der oxydischen Schicht auf die Folien entsprechen den Standardbedingungen. Die Metallisierung der Folien wird vorzugsweise so durchgeführt, daß die optische Dichte der metallisierten Folien im üblichen Bereich von ca. 2,2 bis 2,8 liegen. Das Aufbringen der oxydischen Schicht auf die Folie wird so durchgeführt, daß die Schichtstärke der Oxydschicht vorzugsweise im Bereich von 30 bis 100 nm liegt. Die Bahngeschwindigkeit der zu beschichtenden Folie liegt bei allen Einstellungen zwischen 5 und 20 m/s. Auf die Metallisierung mit einer Laborbedampfungsanlage wurde nicht zurückgegriffen, weil die Erfahrung gezeigt hat, daß dann die Barrierewerte in der Regel wesentlich besser sind und nicht zu Vergleichszwecken herangezogen werden können.

Zur Einstellung weiterer gewünschter Eigenschaften kann die Folie auch chemisch vorbehandelt sein. Typische Beschichtungen sind haftvermittelnde, antistatisch, schlupfverbessernd oder dehäsiv wirkende Schichten. Es bietet sich an, diese zusätzlichen Schichten über in-line coating mittels wässriger Dispersionen vor der Querverstreckung auf die Folie aufzubringen.

Bei einer Metallisierung der Folie besteht die Metallschicht bevorzugt aus Aluminium. Doch sind auch andere Materialien geeignet, die sich in Form einer dünnen, zusammenhängenden Schicht aufbringen lassen. Insbesondere ist z.B. Silizium geeignet, welches im Vergleich zu Aluminium eine transparente Barriereschicht ergibt. Die oxidische Schicht besteht bevorzugt aus Oxyden von Elementen der II., III. oder IV. Hauptgruppe des Periodensystems, insbesondere Oxiden des Magnesiums, Aluminiums oder Siliciums. Allgemein werden solche metallischen oder oxidischen Materialien verwendet, die bei vermindertem Druck bzw. im Vakuum aufgebracht werden können.

Ein weiterer Vorteil besteht darin, daß die Herstellungskosten der erfindungsgemäßen Folie vergleichbar sind mit denjenigen nach dem Stand der Technik. Die sonstigen verarbeitungs- und gebrauchsrelevanten Eigenschaften der erfindungsgemäßen Folie bleiben im wesentlichen unverändert oder sind sogar verbessert. Daneben ist bei der Herstellung der Folie gewährleistet, daß das Regenerat in einer Konzentration von 20 bis 50 Gew.-%, bezogen auf das Gesamtgewicht der Folie, wieder verwendet werden kann, ohne daß dabei die physikalischen Eigenschaften der Folie nennenswert negativ beeinflußt werden.

Die Folie eignet sich hervorragend zur Verpackung von licht- und/oder luftempfindlichen Nahrungs- und Genußmitteln. Daneben ist sie auch hervorragend für den Einsatz im industriellen Bereich, z.B. bei der Herstellung von Prägefolien, geeignet. Speziell geeignet ist sie zur Herstellung von Vakuumverpackungen für Kaffee, insbesondere gemahlenem Kaffee.

Zusammengefaßt zeichnet sich die erfindungsgemäße Folie dadurch aus, daß sie eine sehr gute Gas- bzw. Sauerstoffbarriere hat, nachdem sie metallisiert oder mit oxidischen Materialien beschichtet worden ist. Außerdem besitzt sie das gewünschte gute Verarbeitungsverhalten, insbesondere auf schnelllaufenden Verarbeitungsmaschinen und zeichnet sich durch einen hohen Glanz und durch eine niedrige Trübung aus.

Der Glanz der Folienoberfläche A ist größer als 170. In einer bevorzugten Ausführungsform beträgt der Glanz der Folie mehr als 175 und in einer besonders bevorzugten Ausführungsform mehr als 180. Die Folie eignet sich daher insbesondere für die Bedruckung oder für die Metallisierung. Der hohe Glanz der Folie überträgt sich auf den Druck oder die aufgebrachte Metallschicht und verleiht somit der Folie das gewollte werbewirksame Aussehen.

Die Trübung der Folie ist kleiner als 2,0. In einer bevorzugten Ausführungsform beträgt die Trübung der Folie weniger als 1,9 und in einer besonders bevorzugten Ausführungsform weniger als 1,8.

Das Verabeitungs- und das Wickelverhalten der Folie, insbesondere auf schnelllauffenden Maschinen (Wickler, Metallisierer, Druck- und Kaschiermaschinen) ist ausgesprochen gut. Ein Maß für das Verarbeitungsverhalten ist der Reibungskoeffizient der Folie, der zumindest auf einer Seite kleiner als 0,5 ist. In einer bevorzugten Ausführungsform beträgt er weniger als 0,45 und in einer besonders bevorzugten Ausführungsform weniger als 0,40. Das Wickelverhalten wird neben einem guten Dickenprofil, einer hervorragender Planlage und niedriger Reibungskoeffizienten entscheidend durch die Rauhigkeit der Folie beeinflußt. Es hat sich herausgestellt, daß die Wickelung der Folie insbesondere dann gut ist, wenn unter Einbehalt der anderen Eigenschaften die mittlere Rauhigkeit zumindest einer Folienseite in einem Bereich von 30 bis 90 nm liegt. In einer bevorzugten Ausführungsform liegt die mittlere Rauhigkeit in einem Bereich von 35 bis 80 nm und in einer besonders bevorzugten Ausführungsform in einem Bereich von 40 bis 60 nm.

Die nachstehende Tabelle (Tabelle 1) faßt die wichtigsten erfindungsgemäßen Folieneigenschaften noch einmal zusammen.

**Tabelle 1**

| | erfindungsgemäßer Bereich | bevorzugt | besonders bevorzugt | Einheit | Meßmethode |
|---|---|---|---|---|---|
| Planare Orientierung $\Delta p$ | >0,164 | >0,165 | >0,166 | | Intern |
| Sauerstoffpermeation der metallisierten Folie | <1 | <0,85 | <0,7 | g m$^{-2}$ d$^{-1}$ bar$^{-1}$ | DIN 53 380, Teil 3 |
| Brechungsindex $n_z$ | <1,495 | <1,494 | <1,493 | | Intern |
| Glanz (Meßwinkel 20°)[i] | >170 | >175 | >180 | | DIN 67 530 |
| Trübung[i] | <2,0 | <1,9 | <1,8 | % | ASTM-D 1003-52 |
| Reibungskoefizient | <0,5 | <0,45 | <040 | | DIN 53 375 |

(fortgesetzt)

| | erfindungsgemäßer Bereich | bevorzugt | besonders bevorzugt | Einheit | Meßmethode |
|---|---|---|---|---|---|
| mittlere Rauhigkeit $R_a$ | 30-90 | 35-80 | 40-60 | nm | DIN 4768, bei einem Cut-off von 0,25 mm |
| i) Gemessen an der nicht metallisierten Folie | | | | | |

Zur Charakterisierung der Rohstoffe und der Folien wurden die folgenden Methoden benutzt:

(1) Optische Dichte

Zur Messung der optischen Dichte wurde das Densitometer Macbeth TD-904 von Macbeth (Division of Kollmorgen Instruments Corp.) eingesetzt. Die optische Dichte ist definiert als $OD = - \lg I/I_0$, wobei I: die Intensität des eingestrahlten Lichtes, $I_0$: die Intensität des ausgestrahlten Lichtes und $I/I_0$:die Transmission bedeuten.

(2) Sauerstoffbarriere

Die Messung der Sauerstoffbarriere an den metallisierten Folien erfolgte mit einem OX-TRAN 2/20 von Mocon Modern Controls (USA) entsprechend DIN 53 380, Teil 3.

(3) Bestimmung der planaren Orientierung $\Delta p$

Die Bestimmung der planaren Orientierung erfolgt über die Messung der Brechungsindizes mit dem Abbe-Refraktometer nach folgender Vorschrift:

Probenvorbereitung
Probengröße    Probenlänge:    60 bis 100 mm
                  Probenbreite:    entspricht Prismenbreite von 10 mm

Zur Bestimmung von $n_{MD}$ und $n_\alpha$ $(=n_z)$ muß die zu messende Probe aus der Folie ausgeschnitten werden, bei der die Laufkannte der Probe exakt mit der TD-Richtung übereinstimmen muß. Zur Bestimmung von $n_{TD}$ und $n_\alpha$ $(=n_z)$ muß die zu messende Probe aus der Folie ausgeschnitten werden, bei der die Laufkannte der Probe exakt mit der MD-Richtung übereinstimmen muß. Die Proben sind aus der Mitte der Folienbahn zu entnehmen. Es ist dafür Sorge zu tragen, daß das Abbe-Refraktometer eine Temperatur von 23 °C hat.

Auf das vor der Messung gut gesäuberte untere Prisma wird mit Hilfe eines Glasstabes ein wenig Dijodmethan (N=1,745) bzw. Dijodmethan-Bromnaphthalin-Gemisch aufgetragen. Der Brechungsindex des Gemisches muß größer als 1,685 sein. Darauf wird zuerst die in TD-Richtung ausgeschnittene Probe aufgelegt, so daß die gesamte Prismenoberfläche bedeckt ist. Mit Hilfe eines Papiertaschentuches wird nun die Folie fest auf das Prisma aufgebügelt, so daß die Folie fest und glatt aufliegt. Die überflüssige Flüssigkeit muß abgesaugt werden. Danach wird ein wenig von der Meßflüssigkeit auf die Folie getropft. Das zweite Prisma wird heruntergeklappt und fest angedrückt. Nun wird die Anzeigeskala soweit gedreht, bis im Bereich 1,62 bis 1,68 ein Übergang von hell auf dunkel im Sichtfenster zu sehen ist. Ist der Übergang von hell auf dunkel nicht scharf, werden die Farben so zusammengeführt, daß nur eine helle und eine dunkle Zone sichtbar ist. Die scharfe Übergangslinie wird in den Kreuzungspunkt der beiden (im Okular) diagonalen Linien gebracht. Der nun in der Meßskala angezeigte Wert wird abgelesen und in das Meßprotokoll eingetragen. Dies ist der Brechungsindex in Maschinenrichtung $n_{MD}$. Nun wird die Skala soweit verdreht, daß der im Okular sichtbare Bereich zwischen 1,49 und 1,50 zu sehen ist.

Jetzt wird der Brechungsindex in $n_\alpha$ bzw. $n_z$ (in Dickenrichtung der Folie) ermittelt. Damit der nur schwach sichtbare Übergang besser zu sehen ist, wird auf das Okular eine Polarisationsfolie gelegt. Diese ist solange zu drehen, bis der Übergang deutlich zu sehen ist. Es gilt das gleiche wie bei der Bestimmung von $n_{MD}$. Ist der Übergang von hell auf dunkel nicht scharf (farbig), dann werden die Farben zusammengeführt, so daß ein scharfer Übergang zu sehen ist. Diese scharfe Übergangslinie wird in den Kreuzungspunkt der beiden diagonalen Linien gebracht und der auf der Skala angezeigte Wert abgelesen und in die Tabelle eingetragen.

Anschließend wird die Probe gedreht und die entsprechenden Brechungsindizes $n_{MD}$ und $n_\alpha$ $(=n_z)$ der anderen Oberflächenseite gemessen und in eine entsprechende Tabelle eingetragen.

Nach der Bestimmung der Brechungsindizes in MD-Richtung bzw. in Dickenrichtung wird der in MD-Richtung herausgeschnittene Probenstreifen aufgelegt und entsprechend die Brechungsindizes $n_{TD}$ und $n_\alpha$ (= $n_z$) bestimmt. Der Streifen wird umgedreht und die Werte für die B-Seite gemessen. Die Werte für die A-Seite und die B-Seite werden zu mittleren Brechungswerten zusammengefasst. Die Orientierungswerte werden dann aus den Brechungsindizes nach den folgenden Formeln berechnet:

$$\Delta n = n_{MD} - n_{TD}$$

$$\Delta p = (n_{MD} + n_{TD})/2 - n_z$$

$$n_{av} = (n_{MD} + n_{TD} + n_z)/3$$

(4) SV-Wert

Zur Bestimmung des SV-Wertes (SV = solvent viscosity) wurde eine Polyester-Probe in einem Lösungsmittel (Dichloressigsäure, Konzentration: 1 Gew.-%) gelöst. Die Viskosität dieser Lösung sowie die Viskosität des reinen Lösungsmittels wurden in einem Ubbelohde-Viskosimeter gemessen. Aus den beiden Werten wurde der Quotient (=relative Viskosität $\eta$rel) ermittelt, davon 1,000 abgezogen und dieser Wert mit 1000 multipliziert. Das Resultat war der SV-Wert ("solution viscosity").

(5) Reibung

Die Reibung wurde nach DIN 53 375 bestimmt. Die Reibungszahl wurde 14 Tage nach der Produktion gemessen.

(6) Oberflächenspannung

Die Oberflächenspannung wurde mittels der sogenannten Tintenmethode (DIN 53 364) bestimmt.

(7) Trübung

Die Trübung der Folie wurde nach ASTM-D 1003-52 gemessen. Die Trübungsmessung nach Hölz wurde in Anlehnung an ASTM-D 1003-52 bestimmt, wobei jedoch zur Ausnutzung des optimalen Meßbereichs an vier übereinanderliegenden Folienlagen gemessen und anstelle einer 4E-Lochblende eine 1°-Spaltblende eingesetzt wurde.

(8) Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° oder 60° eingestellt. Ein Lichtstrahl trifft unter dem eingestellten Einstrahlwinkel auf die ebene Prüffläche und werden von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

(9) Bestimmung der Korngrößen auf Folienoberflächen

Die Bestimmung der Größenverteilung von Erhebungen auf Folienoberflächen erfolgt mit einem Rasterelektronenmikroskop und einem Bildanalysesystem. Verwendet wird das Rasterelektronenmikroskop XL30 CP der Fa. Philips mit einem integrierten Bildanalyseprogramm AnalySIS der Fa. Soft-Imaging System.

Für diese Messungen werden Folienproben flach auf einen Probenhalter aufgebracht. Anschließend werden diese unter einem Winkel $\alpha$ mit einer dünnen Metallschicht (z.B. aus Silber) schräg bedampft. Dabei ist $\alpha$ der Winkel zwischen Probenoberfläche und der Ausbreitungsrichtung des Metalldampfes. Durch diese Schrägbedampfung entsteht hinter der Erhebung ein Schattenwurf. Da die Schatten noch nicht elektrisch leitfähig sind, wird die Probe anschließend noch mit einem zweiten Metall (z.B. Gold) bedampft oder gesputtert, wobei die zweite Beschichtung senkrecht auf die Probenoberfläche auftrifft und somit bei der zweiten Beschichtung keine Schatten entstehen.

Die so präparierten Probenoberflächen werden in einem Rasterelektronenmikroskop (REM) abgebildet. Die Schatten der Erhebungen sind infolge des Materialkontrastes der Metallen sichtbar. Die Probe wird im REM so orientiert, daß die Schatten parallel zu einem Bildrand verlaufen. Für die Bildaufnahme werden folgende Bedingungen am REM eingestellt: Sekundärelektronendetektor, Arbeitsabstand 10 mm, Beschleunigungsspannung 10 kV und Spot 4,5. Die Helligkeit und Kontrast werden so eingestellt, daß sämtliche Bildinformationen als Grauwerte dargestellt werden und die Intensität des Grundrauschens so klein ist, daß er nicht als Schatten detektiert wird. Die Länge der Schatten wird mit dem Bildanalyse ausgemessen. Der Schwellwert für die Schattenerkennung wird auf die Stelle gelegt, wo die 2. Ableitung der Grauwertverteilung des Bildes den Nullpunkt durchquert. Vor der Schattenerkennung wird das Bild mit einem NxN-Filter (Größe 3, 1 Iteration) geglättet. Durch die Setzung eines Rahmens ("frame") wird sichergestellt, daß Erhebungen, die im Bild nicht vollständig abgebildet werden, nicht mitgemessen werden. Die Vergrößerung, die Rahmengröße und die Anzahl der ausgewerteten Bildern werden so gewählt, daß insgesamt 0,36 mm² Folienoberfläche ausgewertet werden.

Die Höhe der einzelnen Erhebungen wird aus den einzelnen Schattenlängen mit folgender Beziehung errechnet:

$$h = (\tan \alpha) * L$$

wobei h die Höhe der Erhebung, $\alpha$ der Bedampfungswinkel und L die Schattenlänge ist. Die so ermittelten Erhebungun werden in Klassen eingeteilt um zu einer Häufigkeitsverteilung zu kommen. Die Einteilung erfolgt in 0,05 $\mu$m-breite Klassen zwischen 0 und 1 $\mu$m, wobei die kleinste Klasse (0 bis 0,05 $\mu$m) für weitere Auswertungen nicht verwendet wird. Die Durchmesser (Ausbreitung senkrecht zur Schattenwurfsrichtung) der Erhebungen werden in ähnlicher Weise in 0,2 $\mu$m-breiten Klassen von 0 bis 10 $\mu$m eingestuft, wobei auch hier die kleinste Klasse für die weitere Auswertung verwendet wird.

(10) Rauhigkeit

Die Rauhigkeit $R_a$ der Folie wurde nach DIN 4768 bei einem Cut-off von 0,25 mm bestimmt.

**Beispiel 1**

Chips aus Polyethylenterephthalat (hergestellt über das Umesterungsverfahren mit Mn als Umesterungskatalysator, Mn-Konzentration: 100 ppm) wurden bei 160 °C auf eine Restfeuchte von unterhalb 50 ppm getrocknet und dem Extruder für die Basisschicht B zugeführt.

Daneben wurden Chips aus Polyethylenterephthalat (hergestellt über das Umesterungsverfahren mit Mn als Umesterungskatalysator, Mn-Konzentration: 100 ppm), die entsprechend Tabelle 2 pigmentiert sind, ebenfalls bei 160 °C auf eine Restfeuchte von unterhalb 50 ppm getrocknet und den jeweiligen Extrudern für die Deckschicht zugeführt.

Es wurde durch Coextrusion und anschließende stufenweise Orientierung in Längs- und Querrichtung eine transparente zweischichtige AB Folie mit einer Gesamtdicke von 12 $\mu$m hergestellt. Die Dicke der jeweiligen Schichten ist der Tabelle 2 zu entnehmen.

Deckschichten A:

84,0 Gew.-%   Polyethylenterephthalat RT 49 der Firma Hoechst AG mit einem SV-Wert von 800

16,0 Gew.-%   Masterbatch aus 99,0 Gew.-% Polyethylenterephthalat (SV-Wert von 800) und 0,5 Gew.-% Sylobloc 44 H (kolloidales SiO₂ der Fa. Grace) und 0,5 Gew.-% Aerosil TT 600 (kettenartiges SiO₂ der Fa. Degussa)

Basisschicht B:

90,0 Gew.-%   Polyethylenterephthalat RT 49 der Firma Hoechst AG mit einem SV-Wert von 800

10,0 Gew.-%   Masterbatch aus 99,0 Gew.-% Polyethylenterephthalat (SV-Wert von 800) und 0,5 Gew.-% Sylobloc 44 H (kolloidales SiO₂ der Fa. Grace) und 0,5 Gew.-% Aerosil TT 600 (kettenartiges SiO₂ der Fa. Degussa)

Die Herstellungsbedingungen in den einzelnen Verfahrensschritten waren:

| Extrusion: | Temperatur der A-Schicht: | 300 °C |
| | der B-Schicht: | 300 °C |
| | der C-Schicht: | 300 °C |
| | der Abzugswalze: | 30 °C |
| | Düsenspaltweite: | 1 mm |
| Längsstreckung: | Temperatur: | 80-120°C |
| | Längsstreckverhältnis: | 4,3 |
| Querstreckung: | Temperatur: | 80-135°C |
| | Querstreckverhältnis: | 4,0 |
| Fixierung: | Temperatur: | 230 °C |
| | Dauer: | 3 s |

Die Folie zeichnet sich durch sehr gute optische Eigenschaften und durch ein gutes Verabeitungsverhalten aus (vgl. Tabelle 3).

Nach Herstellung der Folie (nach diesem Beispiel und allen folgenden Beispielen) wurde diese auf der A-Seite in einem industriellen Metallisierer mit Aluminium unter Vakuum bedampft. Die Beschichtungsgeschwindigkeit betrug 8 m/s und die optische Dichte 2,6.

Die Folie hatte die geforderte Gas- bzw. Sauerstoffbarriere. Der Folienaufbau und die erzielten Eigenschaften derart hergestellter Folien sind in den Tabellen 2 und 3 dargestellt.

**Beispiel 2**

Es wurde durch Coextrusion und anschließende stufenweise Orientierung in Längs- und Querrichtung eine transparente dreischichtige Folie mit ABA-Aufbau und einer Gesamtdicke von 12 $\mu$m hergestellt.

Deckschichten A, Mischung aus:

84,0 Gew.-% Polyethylenterephthalat RT 49 der Firma Hoechst AG mit einem SV-Wert von 800

16,0 Gew.-% Masterbatch aus 99,0 Gew.-% Polyethylenterephthalat (SV-Wert von 800) und 0,5 Gew.-% Sylobloc 44 H (Fa. Grace) und 0,5 Gew.-% Aerosil TT 600 (Fa. Degussa)

Die Verfahrensbedingungen waren für alle Schichten wie in Beispiel 1 gewählt.

**Beispiel 3**

Es wurde durch Coextrusion und anschließende stufenweise Orientierung in Längs- und Querrichtung eine transparente dreischichtige Folie mit ABC-Aufbau und einer Gesamtdicke von 12 $\mu$m hergestellt. Im Vergleich zu Beispiel 2 wurden nur die Deckschichten geändert.

Deckschicht A, Mischung aus:

96,0 Gew.-% Polyethylenterephthalat RT 49 der Firma Hoechst AG mit einem SV-Wert von 800

4,0 Gew.-% Masterbatch aus 99,0 Gew.-% Polyethylenterephthalat (SV-Wert von 800) und 0,5 Gew.-% Sylobloc 44 H (Fa. Grace) und 0,5 Gew.-% Aerosil TT 600 (Fa. Degussa)

Deckschicht C, Mischung aus:

84,0 Gew.-% Polyethylenterephthalat RT 49 der Firma Hoechst AG mit einem SV-Wert von 800

16,0 Gew.-% Masterbatch aus 99,0 Gew.-% Polyethylenterephthalat (SV-Wert von 800) und 0,5 Gew.-% Sylobloc 44 H (Fa. Grace) und 0,5 Gew.-% Aerosil TT 600 (Fa. Degussa)

Die Verfahrensbedingungen waren für alle Schichten wie in Beispiel 1 gewählt.

### Beispiel 4

Es wurde durch Coextrusion und anschließende stufenweise Orientierung in Längs- und Querrichtung eine transparente dreischichtige Folie mit ABC-Aufbau und einer Gesamtdicke von 12 $\mu$m hergestellt. Im Vergleich zu Beispiel 3 wurde nur die Deckschicht A geändert.

Deckschicht A, Mischung aus:

99,0 Gew.-%    Polyethylenterephthalat RT 49 der Firma Hoechst AG mit einem SV-Wert von 800

1,0 Gew.-%    Masterbatch aus 99,75 Gew.-% Polyethylenterephthalat (SV-Wert von 800) und 0,25 Gew.-% Aerosil TT 600 (Fa. Degussa)

Die Verfahrensbedingungen waren für alle Schichten wie in Beispiel 1 gewählt.

### Beispiel 5

Es wurde durch Coextrusion und anschließende stufenweise Orientierung in Längs- und Querrichtung eine transparente dreischichtige Folie mit ABC-Aufbau und einer Gesamtdicke von 12 $\mu$m hergestellt. Im Vergleich zu Beispiel 3 wurden nur die Bedingungen in der Längsstreckung geändert.

|  |  |  |
|---|---|---|
| Längsstreckung: | Temperatur: | 80-117°C |
| Längsstreckverhältnis: | | 4,3 |

### Beispiel 6

Es wurde durch Coextrusion und anschließende stufenweise Orientierung in Längs- und Querrichtung eine transparente dreischichtige Folie mit ABC-Aufbau und einer Gesamtdicke von 12 $\mu$m hergestellt. Im Vergleich zu Beispiel 3 wurde nur die Deckschicht A geändert.

Deckschicht A, Mischung aus:

99,0 Gew.-%    Polyethylen-2,6-naphthalat (Polyclear P 100 Prepolymer von Hoechst AG) mit einem SV-Wert von 600

1,0 Gew.-%    Masterbatch aus 99,75 Gew.-% Polyethylenterephthalat (SV-Wert von 800) und 0,25 Gew.-% Aerosil TT 600 (Fa. Degussa)

Die Verfahrensbedingungen waren für alle Schichten wie in Beispiel 1 gewählt. Die planare Orientierung wird bei diesem Beispiel von der C-Seite gemessen.

### Vergleichsbeispiel 1

Es wurde durch Coextrusion und anschließende stufenweise Orientierung in Längs- und Querrichtung eine transparente dreischichtige Folie mit ABC-Aufbau und einer Gesamtdicke von 12 $\mu$m hergestellt. Im Vergleich zu Beispiel 3 wurden nur die Bedingungen in der Längsstreckung geändert.

|  |  |  |
|---|---|---|
| Längsstreckung: | Temperatur: | 80 - 125 °C |
| Längsstreckverhältnis: | | 4,1 |

Nach der Metallisierung hatte die Folie nicht die geforderten Barrierewerte.

EP 0 952 176 B1

**Tabelle 2**

| Beispiel | Foliendicke | Folienaufbau | Schichtdicken | Pigmente in den Schichten | | | mittlerer Pigmentdurchmesser in $\mu$m | | | Pigmentkonzentrationen ppm | | |
|---|---|---|---|---|---|---|---|---|---|---|---|---|
| | | | A/B/C | A | B | C | A | B | C | A | B | C |
| B 1 | 12 | AB | 1,5/10,5 | Sylobloc 44 H | Sylobloc 44 H | keine | 2,5 | 2,5 | | 800 | 500 | 0 |
| | | | | Aerosil TT 600 | Aerosil TT 600 | | 0,04 | 0,04 | | 800 | 500 | 0 |
| B 2 | 12 | ABA | 1,5/9,0/1,5 | Sylobloc 44 H | keine | Sylobloc 44 H | 2,5 | | 2,5 | 800 | 0 | 800 |
| | | | | Aerosil TT 600 | | Aerosil TT 600 | 0,04 | | 0,04 | 800 | 0 | 800 |
| B 3 | 12 | ABC | 1,5/9,0/1,5 | Sylobloc 44 H | keine | Sylobloc 44 H | 2,5 | | 2,5 | 200 | 0 | 800 |
| | | | | Aerosil TT 600 | | Aerosil TT 600 | 0,04 | | 0,04 | 200 | 0 | 800 |
| B 4 | 12 | ABC | 1,5/9,0/1,5 | Sylobloc 44 H | keine | Sylobloc 44 H | 2,5 | | 2,5 | 50 | 0 | 800 |
| | | | | Aerosil TT 600 | | Aerosil TT 600 | 0,04 | | 0,04 | 50 | 0 | 800 |
| B 5 | 12 | ABC | 1,5/9,0/1,5 | Sylobloc 44 H | keine | Sylobloc 44 H | 2,5 | | 2,5 | 200 | 0 | 800 |
| | | | | Aerosil TT 600 | | Aerosil TT 600 | 0,04 | | 0,04 | 200 | 0 | 800 |
| B 6 | 12 | ABC | 1,5/9,0/1,5 | Sylobloc 44 H | keine | Sylobloc 44 H | 2,5 | | 2,5 | 50 | 0 | 800 |
| | | | | Aerosil TT 600 | | Aerosil TT 600 | 0,04 | | 0,04 | 50 | 0 | 800 |
| VB 1 | 12 | ABC | 1,5/9,0/1,5 | Sylobloc 44 H | keine | Sylobloc 44 H | 2,5 | | 2,5 | 200 | 0 | 800 |
| | | | | Aerosil TT 600 | | Aerosil TT 600 | 0,04 | | 0,04 | 200 | 0 | 800 |

14

**Tabelle 3**

| Beispiel | Planare Orientierung $\Delta p$ | Sauerstoffbarriere | Konstanten für die Höhenverteilung der Partikel | | Konstanten für die Dickenverteilung der Partikel | | Reibung $\mu k$ | | Rauhigkeit $R_a$ | | Glanz[i] | | Trübung [i] | Verarbeitungsverhalten |
|---|---|---|---|---|---|---|---|---|---|---|---|---|---|---|
| | | | $A_h$ | $B_h$ | $A_d$ | $B_d$ | A/A | C/C | A-Seite | C-Seite | A-Seite | C-Seite | | |
| | | | A-Seite/C-Seite | | A-Seite/C-Seite | | | | Seite nm | | | | % | |
| | | cm$^3$/(m$^2$ bar d) | | | | | | | | | | | | |
| B1 | 0,165 | 0,8 | 2,2/1,3 | 2,6/2,7 | 2,3/3,0 | 3,1/2,4 | 0,46 | 0,46 | 45 | 40 | 175 | 180 | 1,9 | gut |
| B2 | 0,165 | 0,8 | 2,2/2,2 | 2,6/2,6 | 2,3/2,3 | 3,1/3,1 | 0,4 | 0,4 | 50 | 52 | 195 | 195 | 1,6 | gut |
| B3 | 0,165 | 0,5 | 1,25/2,2 | 1,65/2,6 | 3,3/2,3 | 2,8/3,1 | 0,6 0,6 | 0,4 | 25 | 56 | 200 | 190 | 1,4 | gut |
| B4 | 0,165 | 0,4 | 1,2/2,2 | 1,5/2,6 | 3,18/2,3 | 3,5/3,1 | 0,9 | 0,4 | 15 | 55 | 210 | 190 | 1,3 | gut |
| B5 | 0,168 | 0,3 | 1,2512,2 | 1,65/2,6 | 3,3/2,3 | 2,8/3,1 | 0,6 | 0,4 | 25 | 55 | 195 | 190 | 1,4 | gut |
| B6 | 0,166 | 0,08 | 1,2/2,2 | 1,5/2,6 | 3,18/2,3 | 3,5/3,1 | 0,9 | 0,4 | 12 | 50 | 210 | 185 | 1,2 | gut |
| VB1 | 0,162 | 2,2 | 1,25/2,2 | 1,65/2,6 | 3,3/2,3 | 2,8/3,1 | 0,6 | 0,4 | 24 | 55 | 195 | 180 | 1,5 | gut |

i) Gemessen an der nicht metallisierten Folie A-Seite: metallisierte Deckschicht. Die Sauerstoffbarriere wurde an der metallisierten Folie gemessen C-Seite: unmetallisierte Deckschicht

**EP 0 952 176 B1**

**Patentansprüche**

1. Koextrudierte, zumindestens zweischichtige, biaxial orientierte Polyesterfolie mit einer Basisschicht, die zu mindestens 80 Gew.-% aus einem thermoplastischen Polyester besteht, und mindestens einer Deckschicht, die interne und/oder inerte Partikel enthält, wobei die Folie **dadurch gekennzeichnet ist, daß** ihre planare Orientierung Δp größer als 0,164 ist.

2. Polyesterfolie nach Anspruch 1, **dadurch gekennzeichnet, daß** die planare Orientierung der Folie Δp größer als 0,165 ist, vorzugsweise größer als 0,166 ist.

3. Polyesterfolie nach Anspruch 1 oder 2, **dadurch gekennzeichnet, daß** sie metallisiert ist und die metallisierte Folie eine Sauerstoffbarriere aufweist, die kleiner ist als 1,0 cm$^3$/m$^2$ bar d.

4. Polyesterfolie nach Anspruch 3, **dadurch gekennzeichnet, daß** die metallisierte Folie eine Sauerstoffbarriere aufweist, die kleiner ist als 0,80 cm$^3$/m$^2$ bar d.

5. Polyesterfolie nach einem oder mehreren der Ansprüche 1 bis 4, **dadurch gekennzeichnet, daß** die äußere(n) Deckschich(ten) eine Dicke von 0,1 bis 4,0 μm aufweist(en).

6. Polyesterfolie nach einem oder mehreren der Ansprüche 1 bis 5, **dadurch gekennzeichnet, daß** die Folie dreischichtig aufgebaut ist und aus der äußeren Deckschicht A, der Basisschicht B und einer anderen Deckschicht C besteht, welche auf der der Deckschicht A gegenüberliegenden Seite der Basisschicht B aufgebracht ist.

7. Polyesterfolie nach Anspruch 6, **dadurch gekennzeichnet, daß** die Deckschichten pigmentiert sind.

8. Polyesterfolie nach Anspruch 7, **dadurch gekennzeichnet, daß** die Deckschichten unterschiedlich pigmentiert sind.

9. Polyesterfolie nach einem oder mehreren der Ansprüche 1 bis 8, **dadurch gekennzeichnet, daß** mindestens eine äußere Deckschicht in-line beschichtet ist.

10. Verfahren zur Herstellung einer biaxial orientierten, mehrschichtigen Polyesterfolie gemäß Anspruch 1, bei dem Polyesterschmelzen entsprechend den Zusammensetzungen der Deck- und Basisschichten einer Mehrschichtdüse zugeführt werden, aus dieser auf eine Abkühlwalze extrudiert werden und die so erhaltene Vorfolie anschließend biaxial verstreckt und hitzefixiert wird, wobei die planare Orientierung Δp der erhaltenen Folie größer als 0,164 ist.

11. Verfahren zur Herstellung einer biaxial orientierten, mehrschichtigen Polyesterfolie nach Anspruch 10, bei dem Regenerat in einer Konzentration von 10 bis 50 Gew.-%, bezogen auf das Gesamtgewicht der Folie, der Extrusionsdüse zugeführt wird.

12. Verwendung der Folie nach einem oder mehreren Ansprüchen 1 bis 9 zum Verpacken von Lebens- und Genußmittel.

13. Verwendung der Folie nach einem oder mehreren Ansprüchen 1 bis 9 für die Herstellung von Prägefolien.

**Claims**

1. A biaxially oriented coextruded polyester film which has at least two layers and has a base layer which is composed of at least 80 % by weight of a thermoplastic polyester, and has at least one outer layer which comprises internal and/or inert particles, where the film has planar orientation Δp greater than 0.164.

2. A polyester film as claimed in claim 1, wherein the planar orientation of the film Δp is greater than 0.165, preferably greater than 0.16.

3. A polyester film as claimed in claim 1 or 2, which has been metalized and wherein the metalized film has an oxygen barrier (oxygen permeability) of less than 1. 0 cm$^3$/m$^2$ bar d.

4. A polyester film as claimed in claim 3, wherein the metalized film has an oxygen barrier (oxygen permeability) of less than 0.80 cm$^3$/m$^2$ bar d.

**5.** A polyester film as claimed in one or more of claims 1 to 4, wherein the outward-facing outer layer(s) has/have a thickness of from 0.1 to 4.0 μm.

**6.** A polyester film as claimed in one or more of claims 1 to 5, wherein the film is composed of three layers and is composed of the outward-facing outer layer A, the base layer B and another outer layer C, which has been applied to that side of the base layer B, that is opposite to the outer layer A.

**7.** A polyester film as claimed in claim 6, wherein the outer layers have been pigmented.

**8.** A polyester film as claimed in claim 7, wherein the outer layers have been differently pigmented.

**9.** A polyester film as claimed in one or more of claims 1 to 8, wherein at least one outward-facing outer layer has been in-line coated.

**10.** A process for producing a biaxially oriented polyester film having more than one layer as claimed in claim 1, in which polyester melts corresponding to the formulations of the outer and base layers are fed to a coextrusion die, extruded from this onto a cooling roll, and the resultant prefilm is then biaxially oriented and heat-set, where the planar orientation Δp of the film obtained is greater than 0.164.

**11.** The process for producing a biaxially oriented polyester film having more than one layer as claimed in claim 10, in which recycled material is fed to the extrusion die at a concentration of from 10 to 50 % by weight, based on the total weight of the film.

**12.** The use of the film as claimed in one or more of claims 1 to 9 for packaging of foods and of other consumable items.

**13.** The use of the film as claimed in one or more of claims 1 to 9 for producing hot-stamping/embossing foils.

## Revendications

**1.** Film de polyester coextrudé, au moins bicouche, orienté biaxialement, comportant une couche de base qui comporte au moins 80 % en poids d'un polyester thermoplastique, et au moins une couche de recouvrement qui contient des particules internes et/ou inertes, le film étant **caractérisé en ce que** son orientation planaire Δp est supérieure à 0,164.

**2.** Film de polyester selon la revendication 1, **caractérisé en ce que** l'orientation planaire Δp du film est supérieure à 0,165, de préférence supérieure à 0,166.

**3.** Film de polyester selon la revendication 1 ou 2, **caractérisé en ce qu'**il est métallisé et **en ce que** le film métallisé présente une barrière à l'oxygène qui est inférieure à 1,0 cm$^3$/m$^2$.bar.d.

**4.** Film de polyester selon la revendication 3, **caractérisé en ce que** le film métallisé présente une barrière à l'oxygène qui est inférieure à 0,80 cm$^3$/m$^2$.bar.d.

**5.** Film de polyester selon une ou plusieurs des revendications 1 à 4, **caractérisé en ce que** la(les) couche(s) de recouvrement externe(s) a(ont) une épaisseur de 0,1 à 4,0 μm.

**6.** Film de polyester selon une ou plusieurs des revendications 1 à 5, **caractérisé en ce que** le film a une structure tricouche et **en ce qu'**il comporte la couche de recouvrement externe A, la couche de base B et une autre couche de recouvrement C appliquée sur la face de la couche de base B qui est opposée à la couche de recouvrement A.

**7.** Film de polyester selon la revendication 6, **caractérisé en ce que** les couches de recouvrement sont pigmentées.

**8.** Film de polyester selon la revendication 7, **caractérisé en ce que** les couches de recouvrement sont pigmentées différemment.

**9.** Film de polyester selon une ou plusieurs des revendications 1 à 8, **caractérisé en ce qu'**au moins une couche de recouvrement externe est revêtue en ligne.

**10.** Procédé pour la fabrication d'un film de polyester multicouche orienté biaxialement, selon la revendication 1, dans lequel les masses fondues de polyester correspondant aux compositions des couches de base et de recouvrement sont envoyées à une filière multicouche, sont extrudées de celle-ci sur un cylindre refroidisseur et où le pré-film ainsi obtenu est ensuite étiré biaxialement et thermofixé, l'orientation planaire $\Delta p$ du film obtenu étant supérieure à 0,164.

**11.** Procédé pour la fabrication d'un film de polyester multicouche orientée biaxialement, selon la revendication 10, dans lequel on envoie à la filière d'extrusion un produit de régénération à une concentration de 10 à 50 % en poids, par rapport au poids total du film.

**12.** Utilisation du film selon une ou plusieurs des revendications 1 à 9, pour le conditionnement de produits alimentaires et d'autres produits de consommation.

**13.** Utilisation du film selon une ou plusieurs des revendications 1 à 9, pour la fabrication de films gaufrés.

Figur 1: Zusammenhang zwischen Sauerstoffpermeation und planarer Orientierung Δp

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0490665 A
- EP 0088635 B
- US 5506014 A
- EP 0378955 A
- EP 0580404 A
- EP 0685509 A
- JP 930265665 B
- EP 0602964 A

**In der Beschreibung aufgeführte Nicht-Patentliteratur**

- *Thin Solids Films,* 1991, vol. 204, 203-216
- **VON H. UTZ.** Technische Universität München. *Barriereeigenschaften aluminiumbedampfter Kunststoffolien,* 1995
- **SCHRICKER, G.** Metallisierte Kunststoffolien für höherwertige Verpackungen. *In: ICI 5th International Metallising Symposium,* 1986
- WPI/Derwent Abstract. 1995-166886